# EUROPÄISCHE PATENTSCHRIFT

(11) **EP 3 428 209 B1**
(45) Veröffentlichungstag und Bekanntmachung des Hinweises auf die Patenterteilung: **30.10.2019**
(21) Anmeldenummer: 17181193.8
(22) Anmeldetag: 13.07.2017
(51) Int. Cl.: C08G 18/42, C08G 59/18, C08G 63/672, C09J 175/06

(54) **TEILKRISTALLINE MISCHUNG VON POLYESTERPOLYOLEN UND DEREN VERWENDUNG**
SEMI-CRYSTALLINE MIXTURE OF POLYESTER POLYOLS AND THEIR USE
MÉLANGE SEMI-CRISTALLIN DE POLYESTER POLYOL ET SON UTILISATION

(43) Veröffentlichungstag der Anmeldung: 16.01.2019
(73) Patentinhaber: Henkel AG & Co. KGaA, 40589 Düsseldorf (DE)
(72) Erfinder: BRANDT, Adrian, 45219 Essen (DE); BECK, Horst, 41470 Neuss (DE); KUX, Alexander, 40789 Monheim (DE); SCHRÖDER, Kerstin, 41516 Grevenbroich/Wevelinghoven (DE)

(56) Entgegenhaltungen:
- EP-A1- 1 149 850
- DE-T5-112015 003 392
- WEICKENMEIER M ET AL: "THREADING OF CYCLODEXTRINS ONTO A POLYESTER OF OCTANEDICARBOXYLIC ACID AND POLYETHYLENE GLYCOL", MACROMOLECULAR RAPID COMMUNICATIONS, WILEY-VCH, DE, Bd. 18, Nr. 12, 1. Dezember 1997 (1997-12-01), Seiten 1109-1115, XP000738980, ISSN: 1022-1336, DOI: 10.1002/MARC.1997.030181215

## Beschreibung

Vorliegende Erfindung betrifft eine teilkristalline, beim Schmelzen rekristallisierende Mischung von Polyesterpolyolen erhältlich durch Polykondensation einer Reaktionsmischung umfassend ein oder mehrere Dicarbonsäuren ausgewählt aus gesättigten aliphatischen Dicarbonsäuren mit einer geraden Anzahl von mindestens 8 Methylen-Gruppen sowie ein oder mehrere Diole ausgewählt aus aliphatischen Diolen, die mindestens eine Etherfunktion, aufweisen. In einem weiteren Aspekt betrifft die Erfindung ein polymeres Material, das aus der chemischen Modifizierung der Mischung von Polyesterpolyolen mit organischen Verbindungen hervorgeht, die zumindest eine Isocyanat- und/oder Epoxid-Gruppe enthalten. Die erfindungsgemäßen Mischungen und Materialien zeichnen sich durch verhältnismäßig niedrige Schmelzenthalpien aus, während die Schmelztemperatur in einem Bereich von -30 bis 60 °C eingestellt werden kann, so dass leicht aufschmelzbare Rezepturen enthaltend die erfindungsgemäßen Mischungen und Materialien zugänglich sind. Zudem verleihen die erfindungsgemäße Mischungen und Materialien derartigen Rezepturen eine hohe Elastizität und Bruchfestigkeit. Die vorliegende Erfindung umfasst daher die Verwendung der erfindungsgemäßen Polyesterpolyole und polymeren Materialien als Verform-, Aufschmelz- und Extrusionshilfsmittel in thermoplastischen Materialien, sowie deren Verwendung zur Herstellung von Klebstoffen und Dichtstoffen, insbesondere von Schmelzklebstoffen und Reaktivklebstoffen.

Von besonderer kommerzieller Bedeutung für Kleb- bzw. Dichtstoffe im Allgemeinen sind Polyester, die endständige Hydroxyl-Gruppen aufweisen, sogenannte Polyesterpolyole. Diese sind als solche überaus stabil und chemisch einfach zu modifizieren und werden daher häufig als präpolymerer Bestandteil von reaktiven Klebstoffsystemen eingesetzt. In diesem Zusammenhang offenbart die EP 1 149 850 A1 kristalline Polyesterpolyole mit einer mittleren Molmasse von 1.500-15.000 g/mol erhältlich durch Kondensation einer mehrbasigen Carbonsäure mit 1,10- bzw. 1,12-Dodekandiol, die mit einem Isocyanat-Harz modifiziert Bestandteil eines Schmelzklebstoffes sein können. Die Polyesterpolyole bzw. die mit Isocyanat-Harzen modifizierten Polyesterpolyole ermöglichen, dass der Schmelzklebstoff bei der Applikationstemperatur schnell abbindet und unterhalb der Kristallisationstemperatur eine Klebeverbindung mit hoher mechanischer Stabilität liefert. Auf demselben technischen Gebiet offenbart die DE 11 2015 003 392 T5 Schmelzklebstoffe auf Basis von Polyesterpolyolen mit niedrigem Schmelzpunkt von 130 - 135 °C, die aus einer Mischung von verschiedenen Dicarbonäuren unter anderem Dodekandisäure und einer Mischung von Diolen unter anderem Dipropylenglykol nach Polykondensation hervorgehen.

Für Polyesterpolyole als Bestandteil von Kleb- bzw. Dichtstoffrezepturen ist demnach eine niedrige Schmelzenthalpie bei der Applikation des Klebefilmes für ein energieeffizientes Fertigungsverfahren von Vorteil. Weiterhin wird in diesen Anwendungen die Anforderung gestellt, dass nach dem Abbinden des Klebfilms bzw. der Abdichtung eine hohe Elastizität und mechanische Stabilität der Klebeverbindung bzw. der Dichtung gewährleistet ist. Hierbei ergibt sich häufig die Schwierigkeit, dass eine Verbesserung der mechanischen Stabilität häufig zu Lasten der Elastizität geht und das Material bei mechanischer Beanspruchung zu Kohäsionsbruch neigt. Üblicherweise weist ein Material, dessen Schmelzenthalpie gering ist, auch eine nur geringgradige Kristallinität, so dass die Bereitstellung eines Materials mit verhältnismäßig niedriger Schmelzenthalpie bei gleichzeitig hoher mechanischer Stabilität und Bruchfestigkeit also Elastizität mit erheblichen Entwicklungs- und Erprobungsaufwand einhergeht.

Ein ähnliches Anforderungsprofil ist auch in von Klebstoffen deutlich verschiedenen Anwendungsgebieten von Vorteil und wird daher gefordert. So ist für die Formgebung von thermoplastischen Materialien mittels Extrusions- oder Spritzgussverfahren ganz offenkundig eine niedrige Schmelzenthalpie vorteilhaft und zudem erwünscht, dass das Material unterhalb seines Erweichungspunktes eine hohe Elastizität und mechanische Stabilität aufweist.

Die vorliegende Erfindung stellt sich daher die Aufgabe ein Mischung von Polyesterpolyolen bereitzustellen, über die eine verhältnismäßig niedrige Schmelzenthalpie bei einer Schmelztemperatur im Bereich von -30 °C bis 60 °C zugänglich ist, die aber gleichzeitig als Bestandteil von Kleb- und/oder Dichtstoffen sowie Thermoplasten unterhalb des Erweichungspunktes eine hohe Elastizität und mechanische Stabilität verleiht.

Zu teilkristallinen Polyestern und ihren Derivaten existiert ein umfangreicher wissenschaftlicher Kenntnisstand, der auch in der Patentliteratur in einer Vielzahl von Anwendungen dieser Stoffklasse dokumentiert ist. So ist unter anderem aus der Encyclopedia of Polymer Science and Technology, 1964-1977, Vol. 11, Herman F. Mark, Polyesters bekannt, dass lineare acyclische Polyester mit einer zahlenmittleren Molmasse Mₙ oberhalb von 5.000 g/mol meist wachsartige kristalline Festkörper darstellen, die einen Schmelzbereich von 30 bis 120 °C aufweisen, wobei der Schmelzpunkt mit der Anzahl an Methylengruppen in der Wiederholungseinheit der Polyester ansteigt und Werte erreicht, die denen des entsprechenden Polyethylens entsprechen, während Polyester der Malonsäure extrem niedrige Schmelzpunkte von bis zu -20 °C aufweisen können. In diesem Zusammenhang ist ebenfalls allgemein bekannt, dass, insoweit Alkyl-Gruppen in die lineare Polyesterkette eingeführt werden, der Schmelzpunkt weiter erniedrigt wird und so auch bei höheren Molekulargewichten noch bei 20 °C flüssige Polymermischungen erhalten werden können. Jedoch kann über eine Erhöhung des paraffinischen Charakters der Dicarbonsäure Kristallinität zurückerhalten werden, wie es beispielsweise bei dem Polyester der Sebazinsäure mit 1,2-Propandiol der Fall ist. Basieren die Polyester mehrheitlich auf einem Monomer, das cyclische Struktureinheiten aufweist, so kann der Schmelzpunkt derartiger kristalliner Polyester oberhalb von 200 °C liegen und durch Beimischung von die Amorphizität erhöhenden Monomeren auf nur bis zu 50 °C gesenkt werden.

Es besteht also ein reichhaltiger Erfahrungsschatz darin, die kristallinen Eigenschaften von Polyestermischungen und damit auch deren Schmelzpunkt über strukturelle Modifikation der Monomere anzupassen und auf diese Weise für bestimmte Anwendungen anzupassen.

Überraschenderweise wurde jedoch gefunden, dass Mischungen von teilkristallinen Polyesterpolyolen, die aus bestimmten langkettigen Dicarbonsäuren und bestimmten Ethergruppen-haltigen Diolen aufgebaut sind, beim Schmelzen rekristallisieren und damit eine verhältnismäßig niedrigere Wärmemenge zum Aufschmelzen benötigen. Ebenso überraschend können derartige Mischungen das zuvor beschriebene Anforderungsprofil für eine hohe mechanischer Stabilität bei gleichzeitig hervorragender Bruchfestigkeit also Elastizität im Bereich der Kleb- und Dichtstoffe sowie Thermoplaste erfüllen.

Das Anforderungsprofil und damit die Aufgabe der vorliegenden Erfindung wird also dadurch gelöst, dass eine teilkristalline, beim Schmelzen rekristallisierende Mischung von Polyesterpolyolen bereitgestellt wird, die erhältlich ist durch Polykondensation einer Reaktionsmischung umfassend ein oder mehrere Dicarbonsäuren sowie ein oder mehrere Diole, wobei
a) mindestens 50 Mol.-% der Dicarbonsäuren ausgewählt sind aus gesättigten aliphatischen Dicarbonsäuren mit einer geraden Anzahl von mindestens 8 Methylen-Gruppen, die weder ein tertiäres noch ein quartäres Kohlenstoffatom aufweisen; und
b) mindestens 40 Mol.-% der Diole ausgewählt sind aus aliphatischen Diolen, die mindestens eine Etherfunktion, jedoch weder ein tertiäres noch ein quartäres Kohlenstoffatom aufweisen.

Teilkristalline, beim Schmelzen rekristallisierende Mischungen von Polyesterpolyolen, die erfindungsgemäß aus der Reaktionsmischung der Komponenten a) und b) erhalten werden, besitzen unterhalb ihrer Erweichungspunkt Ring-Kugel gemessen gemäß DIN EN 1238:2011 kristalline Phasen und zeichnen sich zudem dadurch aus, dass während des endothermen Schmelzvorganges vor Erreichen des Erweichungspunktes, d.h. dem Übergang in die flüssige Phase, eine exotherme Rekristallisation auftritt. Die Rekristallisation im Schmelzvorgang ist eine typische Materialeigenschaft der erfindungsgemäßen Mischung der Polyester und kann mittels Differential Scanning Calorimetry (DSC) bei einer Aufheizrate von nicht mehr als 10 Kelvin pro Minute als exothermer Kristallisationspeak in Überlagerung mit dem endothermen Schmelzpeak vor dem Erreichen des Erweichungspunktes nachgewiesen werden. Hierfür heizt man die erfindungsgemäße erhaltene Mischung der Poylesterpolyole auf, nachdem selbige zuvor bis oberhalb des Erweichungspunkts aufgeheizt und mit einer Abkühlungsrate von mindestens 10 Kelvin pro Minute auf eine Temperatur unmittelbar nach dem Durchlaufen des letzten Kristallisationspeaks gebracht wurde, der differenzkalorimetrisch noch bis zu einer Temperatur von -50 °C nachgewiesen werden kann. Wenn im Folgenden auf den Erweichungspunkt der Mischung der Polyester Bezug genommen wird, so ist der Erweichungspunkt Ring-Kugel gemessen gemäß DIN EN 1238:2011 gemeint.

Eine Dicarbonsäure bzw. ein Diol sind im Sinne der vorliegenden Erfindung dann aliphatisch, wenn sie neben Sauerstoffatomen ausschließlich aus Kohlenstoff und Wasserstoffatomen zusammengesetzt sind. Eine Dicarbonsäure im Sinne der vorliegenden Erfindung umfasst auch die entsprechenden jeweiligen einfachen oder zweifachen Methyl- und/oder Ethylester, das jeweilige Säureanhydrid sowie die entsprechenden einfachen oder zweifachen Säurechloride.

Ein Kohlenstoffatom ist quartär wenn es kovalent an vier weitere Kohlenstoffatome gebunden ist, während ein tertiäres Kohlenstoffatom kovalent mit drei weiteren Kohlenstoffatomen verbunden ist.

Erfindungsgemäße Mischungen von Polyesterpolyolen, die durch Polykondensation der Komponenten a) und b) erhältlich sind, benötigen aufgrund ihrer Rekristallisationsneigung eine geringere Schmelzenthalpie und sind insofern leicht schmelzbar. Weiterhin liegt der Erweichungspunkt der Polyesterpolyole in einem Temperaturbereich von -30 bis 60 °C und kann in diesem Bereich beispielsweise durch Auswahl der aliphatischen Kettenlänge der Dicarbonsäure oder derjenigen des Diols gut auf ein schmales Temperaturintervall in diesem Bereich eingestellt werden.

Erstaunlicherweise verleihen die erfindungsgemäßen Mischungen thermoplastischen Materialien und auch Kleb- und/oder Dichtstoffen, insoweit sie in ausreichenden Mengen enthalten sind, eine hervorragende mechanische Stabilität bei gleichzeitig guten elastischen Eigenschaften.

Für eine stärkere Ausprägung des Rekristallisationsverhaltens der erfindungsgemäßen Mischung ist es bevorzugt, dass mindestens 60 Mol.-%, besonders bevorzugt mindestens 70 Mol.-% der Dicarbonsäuren ausgewählt sind aus Dicarbonsäuren gemäß Komponente a) der Reaktionsmischung und/oder mindestens 60 Mol.-%, besonders bevorzugt mindestens 70 Mol.-% der Diole ausgewählt sind aus Diolen gemäß Komponente b) der Reaktionsmischung. Hierüber wird erreicht, dass die Rekristallisation der erfindungsgemäßen Mischung stärker ausgeprägt ist und damit die Wärmemenge, die für das Erreichen des Erweichungspunktes erforderlich ist, weiter erniedrigt wird.

Um andererseits einen Erweichungspunkt einzustellen, der nicht oberhalb von 60 °C liegt, ist es bevorzugt, dass die Dicarbonsäuren gemäß Komponente a) nicht mehr als 24 Methylen-Gruppen, besonders bevorzugt nicht mehr als 18 Methylen-Gruppen, insbesondere bevorzugt nicht mehr als 16 Methylen-Gruppen, wobei hiervon unabhängig die Dicarbonsäuren gemäß Komponente a) vorzugsweise mindestens 10 Methylen-Gruppen umfassen sollten, um solche Polyesterpolyole bereitzustellen, für die die Rekristallisation bei einem möglichst niedrigem Erweichungspunkt maximal ausgeprägt ist. Bevorzugte Vertreter der Dicarbonsäuren gemäß Komponente a) sind also 1,10-Decamethylendicarbonsäure, 1,12-Dodecamethylendicarbonsäure, 1,14-Tetradecamethylendicarbonsäure und 1,16-Hexadecamethylendicarbonsäure.

Die Ausprägung der Rekristallisation der erfindungsgemäßen Mischung von Polyesterpolyolen wird durch die Anwesenheit andere langkettiger Dicarbonsäuren, die keine Dicarbonsäuren gemäß Komponente a) der erfindungsgemäßen Mischung darstellen, stark abgeschwächt. In einer bevorzugten Ausführungsform ist daher der Anteil an Dicarbonsäuren, die keine gesättigten aliphatischen Dicarbonsäuren mit einer geraden Anzahl von mindestens 8 Methylen-Gruppen, jedoch mindestens 9 Kohlenstoffatome aufweisen, bezogen auf den Gesamtanteil an Dicarbonsäuren in der Reaktionsmischung kleiner als 20 Mol.-%, besonders bevorzugt kleiner als 10 Mol.-%, insbesondere bevorzugt kleiner als 4 Mol.-% ist.

Andererseits können bestimmte Dicarbonsäuren, insofern sie der Reaktionsmischung enthalten sind und damit auch struktureller Bestandteil der Polyesterpolyole werden, der erfindungsgemäßen Mischung Eigenschaften verleihen, die für bestimmte Anwendungen vorteilhaft sind. So kann die mechanische Stabilität von Materialien, die die erfindungsgemäßen der Polyesterpolyole in signifikanten Mengen enthalten, erheblich erhöht werden, wenn die Polyesterpolyole zu einem gewissen Anteil aus aromatischen Dicarbonsäuren bestehen. Hier sind insbesondere die Isophtalsäure, Terephtalsäure, Orthophtalsäure, Furandicarbonsäure, insbesondere 2,5-Furandicarbonsäure, zu nennen, die in einer besonders bevorzugten Ausführungsform zusätzlich in der Reaktionsmischung enthalten sind. Positiv wirkt sich ein Anteil an aromatischen Dicarbonsäuren in den erfindungsgemäßen Polyesterpolyolen auch auf die Klebrigkeit aus, wenn selbige häufig mit Isocyanaten und/oder Epoxiden modifiziert in Kleb- und/oder Dichtstoffen eingesetzt werden. In diesem Anwendungsgebiet können auch solche erfindungsgemäßen Polyesterpolyole verwendet werden, in denen ungesättigte Dicarbonsäuren mit weniger als 9 Kohlenstoffatomen enthalten sind, da hierüber Mischungen bereitgestellt sind, die über die aliphatische Doppelbindung vernetzt werden können und somit zur mechanischer Stabilität und Kohäsion der Klebeverbindung bzw. Dichtung gewinnen können. Hier sind insbesondere die Itakonsäure, Fumarsäure und/oder Maleinsäure zu nennen, die in einer besonders bevorzugten Ausführungsform zusätzlich in der Reaktionsmischung enthalten sind.

Damit sich der positive Effekt dieser Beimischungen zur Reaktionsmischung entfalten kann, ist bevorzugt, dass der Anteil an ungesättigten Dicarbonsäuren mit weniger als 9 Kohlenstoffatomen und/oder aromatischen Dicarbonsäuren, wobei eine Beimischung von aromatischen Dicarbonsäuren als besonders effektiv für die Verbesserung der mechanischen Stabilität und Kohäsion in Klebeverbindungen bzw. Dichtungen hervorzuheben ist, bezogen auf den Gesamtanteil der Dicarbonsäuren in der Reaktionsmischung zur Herstellung der erfindungsgemäßen Mischung der Polyesterpolyole jeweils mindestens 2 Mol.-%, besonders bevorzugt jeweils mindestens 8 Mol.-%, insbesondere bevorzugt jeweils mindestens 15 Mol.-% beträgt.

Die Beimischung dieser Dicarbonsäuren zur Verbesserung der mechanischen Stabilität der hat jedoch mit Bedacht zu erfolgen und sollte nicht die generelle Eigenschaft der Polyesterpolyole leicht aufschmelzbar zu sein in erheblichen Maße mindern. Daher sind die Anteile an ungesättigten Dicarbonsäuren mit weniger als 9 Kohlenstoffatomen und aromatischen Dicarbonsäuren in der Summe vorzugsweise kleiner als 40 Mol.-%, besonders bevorzugt kleiner als 30 Mol.-% bezogen auf den Gesamtanteil der Dicarbonsäuren in der Reaktionsmischung.

Andererseits ist es essentiell für das Vorliegen der Rekristallisation der Mischung der Polyesterpolyole, dass ein erheblicher Anteil von mindestens 40 Mol.-% der aliphatischen Diole der Reaktionsmischung weder quartäre noch tertiäre Kohlenstoffatome aufweist und damit linear aufgebaut ist. Weiterhin von Bedeutung ist auch hier, dass der Erweichungspunkt bei möglichst niedrigen Temperaturen eingestellt ist, aber die Mischung dennoch hinreichend teilkristallin ist, dass der Effekt der Rekristallisation eintritt. So kann durch mehrfache Etherfunktionalitäten im Diol der Erweichungspunkt reduziert werden, gleichzeitig geht dies jedoch zu Lasten der Fähigkeit des Materials zur Rekristallisation. In einer bevorzugten Ausführungsform sind die aliphatischen Diole der Komponente b) der erfindungsgemäßen Mischung daher ausgewählt aus Diolen der allgemeinen Strukturformel H-([O-(CH₂)ₘ]ₓ-[O-(CH₂)ₙ]_{y})_{z}-OH mit m, n als positive ganze Zahlen von 1 bis 4, mit x, y als nicht negative ganze Zahlen, wobei x+y mindestens 1 ist, und mit z als positiver ganzer Zahl, wobei (x+y)z mindestens 2 und z(x(m+1)+y(n+1)) kleiner als 40 ist. Vertreter derartige Diole sind neben Diethylenglykol, Triethylenglykol bzw. Dipropylenglykol, Tripropylenglykol und den jeweiligen weiteren Homologen auch Diole, die sich aus Ethylenglykol- und 1,3-Propylenglykol-Einheiten zusammensetzen, beispielsweise 3-Oxahexan-1,6-diol, 3,7-Dioxanonan-1,9-diol, 3,8-Dioxaoctan-1,10-diol.

In diesem Zusammenhang besonders bevorzugt gilt für die aliphatischen Diole gemäß Komponente b), dass m gleich 2, x gleich 1, y gleich Null und z vorzugsweise kleiner als 10, besonders bevorzugt kleiner als 8, ganz besonders bevorzugt kleiner als 6 ist. Derartige Diole sind Diethylenglykol, Triethylenglykol, Tetraethylenglykol, Pentaethylenglykol und Hexaethylenglykol.

Auch für die übrigen aliphatischen Diole gilt, dass deren Anteil insoweit es sich nicht um Diole gemäß der Komponente b) handelt, nicht in einem solchen Maß in der Reaktionsmischung enthalten sein sollten, dass die Ausprägung der Mischung von Polyesterpolyolen zur Rekristallisation signifikant gemindert wird. Hier kommt es entscheidend auf den überwiegenden linearen Aufbau der Diole mit Etherfunktionalität an, so dass in einer bevorzugten Ausführungsform der Anteil an Diolen, die keine Diole gemäß Komponente b) darstellen und sowohl mindestens eine Etherfunktion als auch tertiäre und/oder quartäre Kohlenstoffatome aufweisen, bezogen auf den Gesamtanteil an Diolen in der Reaktionsmischung zur Herstellung der erfindungsgemäßen Mischung an Polyesterpolyolen kleiner als 20 Mol.-%, besonders bevorzugt kleiner als 10 Mol.-%, insbesondere bevorzugt kleiner als 4 Mol.-% ist.

Ein gewisser Anteil an solchen aliphatischen Diolen in der Reaktionsmischung, die keine Etherfunktion aufweisen und nicht mehr als 10 Kohlenstoffatome aufweisen, kann jedoch nützlich sein, wenn an die Mischung der Polyesterpolyol die Anforderung gestellt wird, in einem bestimmten Temperaturintervall vollständig aufzuschmelzen. So verschieben aliphatische lineare Diole mit geringer Kettenlänge, den Erweichungspunkt zu höheren Temperaturen, während verzweigte Diole eine Erweichungspunkterniedrigung herbeiführen.

Daher sind in einer bevorzugten Ausführungsform in der Reaktionsmischung zur Herstellung der erfindungsgemäßen Polyesterpolyole zusätzlich zu den Diolen gemäß Komponente b) aliphatische Diole enthalten sind, die keine Etherfunktion und nicht mehr als 10 Kohlenstoffatome aufweisen, die wiederum vorzugsweise ausgewählt sind aus Ethylenglykol, 1,3-Propandiol, 1,4-Butandiol, 1,6-Hexandiol und/oder 1,8-Oktandiol, wobei deren Anteil bezogen auf den Gesamtanteil der Diole vorzugsweise mindestens 1 Mol.-%, jedoch vorzugsweise kleiner als 40 Mol.-%, besonders bevorzugt kleiner als 20 Mol.-% und ganz besonders bevorzugt kleiner als 10 Mol.-% ist, um einerseits einen signifikante Verschiebung des Erweichungspunktes herbeiführen zu können, aber andererseits die Neigung der erhaltenen Mischung an Polyesterpolyolen zur Rekristallisation nicht aufzuheben.

Unverzweigte β-, γ-, δ- und/oder ε-Hydroxycarbonsäuren, die auch in ihrer Lacton-Form vorliegen können in geringen Mengen, die Elastizität von solchen Materialien erhöhen, die aus mit Isocyanat- und/oder Epoxid-Gruppen modifizierten erfindungsgemäßen Mischungen der Polyesterpolyole hervorgehen. Dementsprechend kann für spezielle Anwendungen, in denen eine hohe Elastizität eines polymeren Materials abverlangt wird, das auf die erfindungsgemäßen Polyesterpolyole abstellt, bevorzugt sein, dass der Anteil an unverzweigten β-, γ-, δ- und/oder ε-Hydroxycarbonsäuren, die auch in ihrer Lacton-Form vorliegen können, bezogen auf den Gesamtanteil der Dicarbonsäuren mindestens 1 Mol.-%, besonders bevorzugt mindestens 4 Mol.-% beträgt, jedoch zur Wahrung der Eigenschaft der Polyesterpolyole leicht zu schmelzen vorzugsweise insgesamt weniger als 35 Mol.-%, besonders bevorzugt insgesamt weniger als 22 Mol.-%, insbesondere bevorzugt insgesamt weniger als 15 Mol.-% derartiger Hydroxycarbonsäuren bezogen auf den Gesamtanteil der Dicarbonsäuren in der Reaktionsmischung.

Für eine weitreichende Konversion der monomeren Bestandteile der Reaktionsmischung zu einer erfindungsgemäßen Mischung der Polyesterpolyole, die im festen Zustand Teilkristallinität inne hat und beim Schmelzen rekristallisert, ist bevorzugt, dass der Anteil anderer kondensationsfähiger organischer Verbindungen, die weder Dicarbonsäuren noch Diole noch eine Hydroxycarbonsäure ausgewählt aus unverzweigten β-, γ-, δ- und/oder ε-Hydroxycarbonsäuren darstellen, in der Reaktionsmischung insgesamt kleiner als 10 Gew.-% bezogen auf den Gesamtanteil der Dicarbonsäuren und Diole ist. In diesem Zusammenhang ist unter einer kondensationsfähigen organischen Verbindung, eine Verbindung zu verstehen, die unter den gewählten Reaktionsbedingungen in der Lage ist entweder mit den Dicarbonsäuren oder mit den Diolen der Reaktionsmischung an deren funktionelle Gruppen unter Ausbildung einer kovalenten Verbindung unter Abspaltung von Wasser oder Säuren oder unter Ringöffnung zu addieren, insbesondere sind vorliegend unter einer kondensationsfähigen Verbindung Hydroxyl- und/oder Carboxylgruppenhaltige organische Verbindungen sowie Lactone zu verstehen.

Aus gleichen Erwägungsgründen ist es vorteilhaft, wenn der Anteil an organischen Verbindungen, die Isocyanat-Gruppen aufweisen, in der Reaktionsmischung kleiner als 1 Gew.-% berechnet als HN=C=O bezogen auf den Gesamtanteil der Dicarbonsäuren und Diole ist. Unter einer Isocyanat-Gruppe werden in diesem Zusammenhang sowohl freie als auch blockierte bzw. geschützte Isocyanat-Gruppen verstanden.

Um der erfindungsgemäße Mischung von Polyesterpolyolen für eine nachfolgende chemische Modifizierung durch Addition von Isocyanat-Gruppen und/oder Epoxid-Gruppen eine ausreichende Anzahl an terminalen Hydroxyl-Gruppen zu verleihen, ist es vorteilhaft, wenn die Diole in der Reaktionsmischung im molaren Überschuss bezogen auf die Dicarbonsäuren enthalten sind, jedoch vorzugsweise nicht oberhalb eines Überschusses von 1,2 : 1, da anderenfalls eine portionsweise Zugabe des Diols zur Reaktionsmischung oder die Vorlage des Diols bei der Verfahrensführung notwendig wird, um ein genügend hohes mittleres Molekulargewicht der Polyesterpolyole der Mischung zu erzielen, wobei diese Mischungen dann denjenigen erhältlich aus stöchiometrischen Umsetzungen strukturell ähnlich sind und sich lediglich durch einen erhöhten Anteil an unreagierten Diolen auszeichnen, was ebenfalls zu vermeiden ist.

Als ideal hinsichtlich Molmassenverteilung, die wesentlich das Rekristallisationsverhalten der Mischung bestimmt, und Hydroxyl-Funktionalität, die die Kompatibilität mit mono- und polyfunktionellen Isocyanaten und/oder Epoxiden bestimmt, haben sich solche Mischungen von Polyesterpolyolen herausgestellt, die eine Säurezahl kleiner als 50 mg KOH/g, besonders bevorzugt kleiner als 10 mg KOH/g, insbesondere bevorzugt kleiner als 5 mg KOH/g und ganz besonders bevorzugt kleiner als 2 mg KOH/g jeweils pro Gramm der Reaktionsmischung aufweisen, wobei die Hydroxylzahl vorzugsweise im Bereich von 10 bis 150 mg KOH/g, besonders bevorzugt im Bereich von 20 bis 120 mg KOH/g jeweils pro Gramm der Reaktionsmischung liegt. In einer besonders bevorzugten Ausführungsform besitzt die erfindungsgemäße Mischung der Polyesterpolyole eine Säurezahl unterhalb von 5 mg KOH/g und ist erhältlich aus einer Reaktionsmischung der Komponenten a) und b), wobei die Diole in molarem Überschuss bezogen auf die Dicarbonsäuren in der Reaktionsmischung enthalten sind, jedoch nicht oberhalb eines Überschusses von 1,2 : 1.

Die Säurezahl ist erfindungsgemäß eine experimentell zu bestimmende Messgröße, die ein Maß für die Anzahl der freien Säuregruppen in der jeweils definierten Bezugsmenge ist, beispielsweise pro Gramm der Reaktionsmischung. Die Säurezahl wird bestimmt, indem eine eingewogene Probe der Bezugsmenge in einem Lösemittelgemisch aus Methanol und destilliertem Wasser im Volumenverhältnis 3 : 1 gelöst und anschließend mit 0,05 mol/l KOH in Methanol potentiometrisch titriert wird. Die potentiometrische Messung erfolgt mit einer Einstabmesskette (LL-Solvotrode® der Fa. Metrohm; Bezugselektrolyt: 0,4 mol/l Tetraethylammoniumbromid in Ethylenglykol). Die Säurezahl entspricht dabei der hinzugesetzten Menge an KOH pro Gramm der Bezugsmenge im Wendepunkt der potentiometrischen Titrationskurve.

Analog gilt erfindungsgemäß, dass die Hydroxylzahl als Maß für die Anzahl an freien Hydroxylgruppen in der jeweils definierten Bezugsmenge, beispielsweise pro Gramm der Reaktionsmischung, experimentell durch potentiometrische Titration bestimmt werden kann. Hierfür wird eine eingewogene Probe der Bezugsmenge in einer Reaktionslösung von 0,1 mol/l Phtalsäureanhydrid in Pyridin bei 130 °C für 45 Minuten erwärmt und zunächst mit dem 1,5 fachen Volumen der Reaktionslösung an Pyridin und anschließend mit dem 1,5 fachen Volumen der Reaktionslösung an entionisiertem Wasser (κ < 1 µScm^{- 1}) versetzt. Die freigesetzte Menge an Phtalsäure wird in diesem Gemisch mittels 1 M Natronlauge titriert. Die potentiometrische Messung erfolgt mit einer Einstabmesskette (LL-Solvotrode® der Fa. Metrohm; Bezugselektrolyt: 0,4 mol/l Tetraethylammoniumbromid in Ethylenglykol). Die Hydroxylzahl entspricht dabei der hinzugesetzten Menge an NaOH pro Gramm der Bezugsmenge im Wendepunkt der potentiometrischen Titrationskurve.

Die zuvor bezüglich Säure- und Hydroxylzahl definierten Mischungen weisen üblicherweise eine zahlenmittlere Molmasse im Bereich von 2.000 - 5.000 g/mol bei einer Polydispersität von weniger als 2,5 auf, so dass dieser Molmassenbereich und die dazugehörige Polydispersität ebenfalls erfindungsgemäß bevorzugt sind, um Mischungen zu erhalten, die sowohl leicht aufschmelzbar sind als auch in chemisch modifizierter Form polymeren Materialien eine hohe Elastizität und mechanische Stabilität verleihen können. Die zahlenmittlere Molmasse kann anhand einer Probe der Reaktionsmischung mittels Gelpermeationschromatographie nach Kalibration gegen Polystyrol-Standards bestimmt werden. Hierzu ist bei einer Säulenofentemperatur von 40 °C durch Eluation mit Tetrahydrofuran zu chromatographieren, wobei die Verteilungskurve mittels eines konzentrationsabhängigen RI-Detektors aufgenommen wird, der kontinuierlich den Brechungsindex im Eluat bei einer Temperatur von ebenfalls 40°C bestimmt.

Die erfindungsgemäße Mischung der Polyesterpolyole wird durch Kondensation der Bestandteile der Reaktionsmischung herbeigeführt. In einer bevorzugten Ausführungsform erfolgt die Kondensation in Substanz bei einer Temperatur im Bereich von 50 bis 300 °C, besonders bevorzugt oberhalb von 80 °C, jedoch besonders bevorzugt unterhalb von 240 °C und ggf. in Anwesenheit eines Katalysators, der vorzugsweise ausgewählt ist aus Alkoxiden des Elements Titan. Weiterhin ist bevorzugt, dass aus der Reaktionsmischung Kondensat also insbesondere Wasser bzw. Methanol/Ethanol oder HCl, insofern die entsprechende Ester oder Säurechloride eingesetzt werden, vorzugsweise bei vermindertem Druck, der vorzugsweise zumindest zeitweise unterhalb von 50 mbar liegt, entfernt wird.

In einer besonders bevorzugten Ausführungsform betrifft die vorliegende Erfindung daher eine teilkristalline, beim Schmelzen rekristallisierende Mischung von Polyesterpolyolen mit einer Säurezahl unterhalb von 5 mg KOH/g erhältlich oder hergestellt durch Polykondensation einer Reaktionsmischung umfassend ein oder mehrere Dicarbonsäuren sowie ein oder mehrere Diole, wobei
a) mindestens 50 Mol.-% der Dicarbonsäuren ausgewählt sind aus gesättigten aliphatischen Dicarbonsäuren mit einer geraden Anzahl von mindestens 8 Methylen-Gruppen, die weder ein tertiäres noch ein quartäres Kohlenstoffatom aufweisen;
b) mindestens 40 Mol.-% der Diole ausgewählt sind aus aliphatischen Diolen, die mindestens eine Etherfunktion, jedoch weder ein tertiäres noch ein quartäres Kohlenstoffatom aufweisen;
c) ggf. einen Katalysator, vorzugsweise ausgewählt aus Alkoxiden des Elements Ti;
wobei die Diole in molarem Überschuss bezogen auf die Dicarbonsäuren in der Reaktionsmischung enthalten sind und wobei die Reaktionsmischung in einem Temperaturbereich von 50 - 300 °C gehalten und die Reaktionsmischung nicht eher auf eine Temperatur unterhalb Temperaturbereichs gebracht wird, bis die Säurezahl in der Reaktionsmischung unterhalb von 5 mg KOH/g liegt.

Insofern betrifft die vorliegende Erfindung auch ein Verfahren zur Herstellung einer teilkristallinen, beim Schmelzen rekristallisierenden Mischung eines Polyesterpolyols, bei dem eine Reaktionsmischung umfassend ein oder mehrere Dicarbonsäuren sowie ein oder mehrere Diole und ggf. einen Katalysator, vorzugsweise ausgewählt aus Alkoxiden des Elements Ti, wobei die Diole im molaren Überschuss bezogen auf die Dicarbonsäuren enthalten sind und
a) mindestens 50 Mol.-% der Dicarbonsäuren ausgewählt sind aus gesättigten aliphatischen Dicarbonsäuren mit einer geraden Anzahl von mindestens 8 Methylen-Gruppen, die weder ein tertiäres noch ein quartäres Kohlenstoffatom aufweisen, sowie
b) mindestens 40 Mol.-% der Diole ausgewählt sind aus aliphatischen Diolen, die mindestens eine Etherfunktion, jedoch weder ein tertiäres noch ein quartäres Kohlenstoffatom aufweisen,
mindestens für eine solche Dauer auf eine Temperatur im Bereich von 50 - 300 °C gebracht wird, die ausreicht, dass die Säurezahl in der Reaktionsmischung auf einen Wert unterhalb von 5 mg KOH/g fällt.

In einem bevorzugten erfindungsgemäßen Verfahren wird zumindest phasenweise, und während eine Temperatur im Bereich von 50 - 300 °C eingestellt ist, Kondensat, also insbesondere Wasser bzw. Methanol/Ethanol oder HCl, insofern die entsprechende Ester oder Säurechloride eingesetzt werden, aus der Reaktionsmischung, vorzugsweise bei vermindertem Druck, der vorzugsweise zumindest zeitweise unterhalb von 50 mbar liegt, entfernt.

Die bevorzugten Ausführungsformen, die bezüglich der erfindungsgemäßen Mischung der Polyesterpolyole angeführt sind, gelten sinngemäß auch für das erfindungsgemäße Verfahren zur Herstellung der Mischung.

Die vorliegende Erfindung umfasst ferner ein polymeres Material erhältlich durch Addition solcher organischen Verbindungen, die mindestens eine Epoxid- und/oder Isocyanat-Gruppe, vorzugsweise mindestens zwei dieser Gruppen und besonders bevorzugt mindestens zwei Isocyanat-Gruppen enthalten, an terminale Hydroxyl-Gruppen einer erfindungsgemäßen Mischung von Polyesterpolyolen. Unter einer Isocyanat-Gruppe werden in diesem Zusammenhang sowohl freie als auch blockierte bzw. geschützte Isocyanat-Gruppen verstanden. Ein solches polymeres Material weist eine hohe Elastizität auch dann noch auf, wenn eine weitere Vernetzung über addierte aber noch unreagierten Isocyanat-Gruppen, bspw. nach Modifikation mit polyfunktionellen Isocyanaten, die entweder zumindest eine weitere Isocyanat-Gruppe oder zusätzliche vernetzende funktionale Gruppen, wie Epoxid-, Alkoxysilyl- und/oder Acrylat-Gruppen, aufweisen, stattfindet. Werden die bereits an die Polyesterpolyole addierten organischen Verbindungen, die weitere unreagierte Isocyanat-Gruppen aufweisen, durch Zugabe von Alkoholen "abgelöscht" so behält das polymere Material seine thermoplastischen Eigenschaften bei einer hohen Klebrigkeit und kann zudem leicht aufgeschmolzen werden. Das erfindungsgemäße polymere Material eignet sich daher sowohl als Bestandteil von thermoplastischen Materialien, vorzugsweise als Klebrigmacher in Kleb- und/oder Dichtstoffen, besonders bevorzugt als Bestandteil von Schmelzklebstoffen, als auch als Bestandteil in vernetzenden Reaktivklebstoffen. Bezüglich des erfindungsgemäßen polymeren Materials ist eine chemische Modifizierung mittels Toluol-2,4-diisocyanat, Hexamethylendiisocyanat, Isophorondiisocyanat, 1,4-Cyclohexyldiisocyanat und/oder Diphenylmethandiisocyanat bevorzugt.

Demnach betrifft die vorliegende Erfindung in einem besonderen Aspekt auch die Verwendung der erfindungsgemäßen Mischung der Polyesterpolyole oder des erfindungsgemäßen polymeren Materials als Bestandteil eines thermoplastischen Materials oder eines Kleb-und/oder Dichtstoffes. Während die erfindungsgemäße Mischung der Polyesterpolypole sowohl in Thermoplasten als Verform- und Extrusionshilfsmittel oder auch als Aufschmelzhilfsmittel für physikalisch abbindende Kleb- und/oder Dichtstoffe verwendet werden kann, findet das erfindungsgemäße polymere Material sowohl in Thermoplasten und als Klebrigmacher in Klebstoffen, vorzugsweise in Schmelzklebstoffen, als auch in vernetzenden Reaktivklebstoffen Anwendung, da über das enthaltene erfindungsgemäße polymere Material eine niedrige Applikationstemperatur und eine hohe Elastizität und mechanische Stabilität der Klebeverbindung zugänglich ist.

### Ausführungsbeispiele:

Im Folgenden wird die Herstellung der erfindungsgemäßen Mischungen der Polyesterpolyole dargelegt und das jeweilige Schmelzverhalten mittels dynamischer Differenzkalorimetrie (DSC) charakterisiert und mit Polyesterpolyolen verglichen, die aus Dicarbonsäuren und Diolen hergestellt wurde, die keine Komponente a) oder b) gemäß erstem Anspruch der vorliegenden Erfindung darstellen.

Die Herstellung der Mischungen der Polyesterpolyole erfolgte nach folgendem Schema:
In einem 1 Liter-Vierhalskolben ausgerüstet mit Stickstoffeinleitung, Thermostat, Flügelrührer und Destillationsarm wurde eine Menge der Dicarbonsäure(n) mit der entsprechenden Menge an Diol in molarem Überschuss bezogen auf die Menge der Dicarbonsäure(n) vorgelegt und gemischt. Die Reaktionsmischung wurde aufgeheizt und bei einer Temperatur von 200 °C im Stickstoffstrom für ungefähr 8 Stunden gerührt. Sodann wurde die Reaktionsmischung abgekühlt und 0,02 Gew.-% bezogen auf die Reaktionsmischung an Tetraisopropyltitanat hinzugegeben. Im Anschluss daran wurde die Reaktionsmischung auf 200 °C erhitzt und der Druck im Reaktionskolben schrittweise auf 30 mbar reduziert. Die Säurezahl wurde laufend, wie zuvor in der Beschreibung der Erfindung detailliert erläutert, kontrolliert. Sobald die Säurezahl unterhalb eines Wertes von 3 mg KOH/g bezogen auf die Reaktionsmischung sank, wurde die Reaktionsmischung zunächst auf 80 °C abgekühlt und abgekühlt, wonach man die Reaktionsmischung weiter auf Raumtemperatur abkühlen ließ. Hernach wurde die Säurezahl und Hydroxylzahl endgültig bei 20 °C bestimmt und die Mischung chromatographisch charakterisiert.

Zur chromatographischen Charakterisierung mittels Gelpermeationschromatographie (GPC) wurde eine Probe der Reaktionsmischung mit Tetrahydrofuran gelöst und auf die Säule gegeben und im Folgenden auch mit Tetrahydrofuran eluiert. Die Gelpermeationschromatographie (GPC) mit RI-Detektor nach Kalibrierung mittels Polystyrol-Standards erfolgte bei einer Säulenofentemperatur von 40 °C und einer Temperatur im Detektor von ebenfalls 40 °C. Aus der Molmassenverteilungskurve wurden die relativen zahlen- und gewichtsmittleren Molmassenmittelwerte ermittelt und daraus die Polydispersität bestimmt.

In der Tabelle 1 sind die jeweiligen Einwaagen und die spezifischen Monomere zur Herstellung der jeweiligen Polyesterpolyole wiedergegeben.

Die Polyesterpolyole, die gemäß der Tabelle 1 hergestellt wurden, wurden differenzkalorimetrisch vermessen, wobei eine Probe der Reaktionsmischung zunächst auf 150 °C aufgeheizt wurde, um anschließend mit einer Abkühlrate von 10 Kelvin pro Minute auf -90 °C gebracht zu werden. Nach 10 Minuten bei -90 °C wurde die Probe der Reaktionsmischung mit einer Aufheizrate von 10 Kelvin pro Minute auf 150 °C gebracht und das DSC-Diagramm aufgezeichnet.

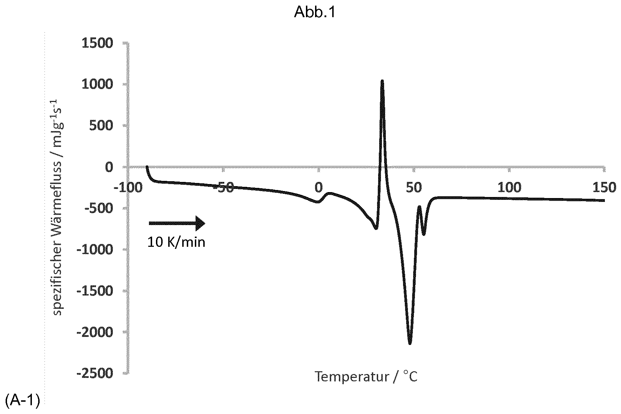

In Abbildung 1 ist ein für erfindungsgemäße Mischungen von Polyesterpolyolen charakteristisches DSC-Diagramm anhand des konkreten Beispiels A-1wiedergegeben, das den Effekt der exothermen Rekristallisation in Überlagerung mit dem endothermen Schmelzvorgang veranschaulicht.

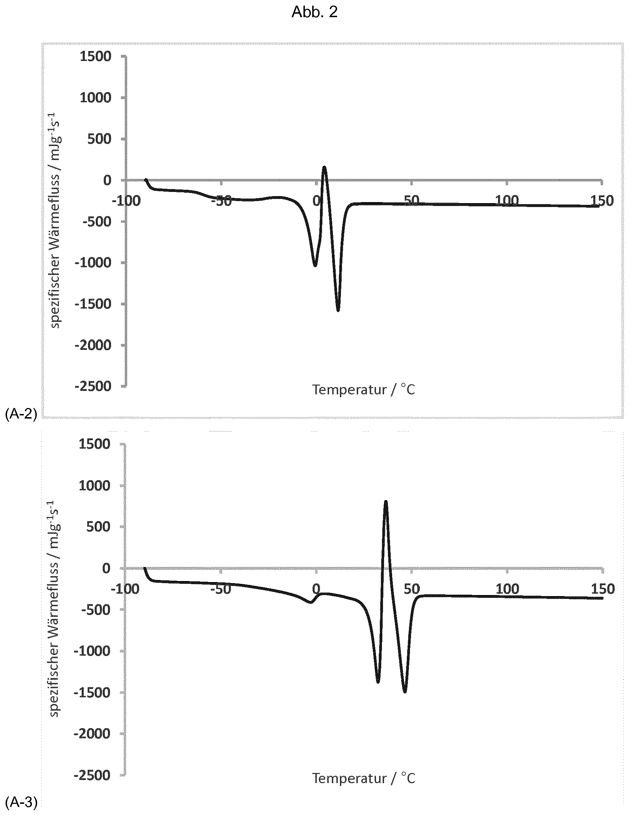

Aus der Abbildung 2 wird ersichtlich, dass die erfindungsgemäßen Polyesterpolyolmischungen (A-2) und (A-3) jeweils auch einen exothermen Rekristallisationspeak in Überlagerung mit dem Schmelzvorgang aufweisen. Der Schmelzvorgang kann bei Verwendung des Polyethylenglykols hin zu einem deutlich niedrigeren Temperaturbereich von 0-20 °C verschoben werden, wobei der Anteil der Rekristallisation im Verhältnis zum endothermen Schmelzpeak nahezu unverändert bleibt, so dass weiterhin eine gut aufschmelzbare Mischung an Polyesterpolyolen resultiert. Auch die Beimischung von 2,5-Furandicarbonsäure (A-3) oder Isophtalsäure (B-1) verringert kaum die Ausprägung des Rekristallisationsverhaltens, wobei eine Verschiebung des Schmelzbereiches nicht eintritt.

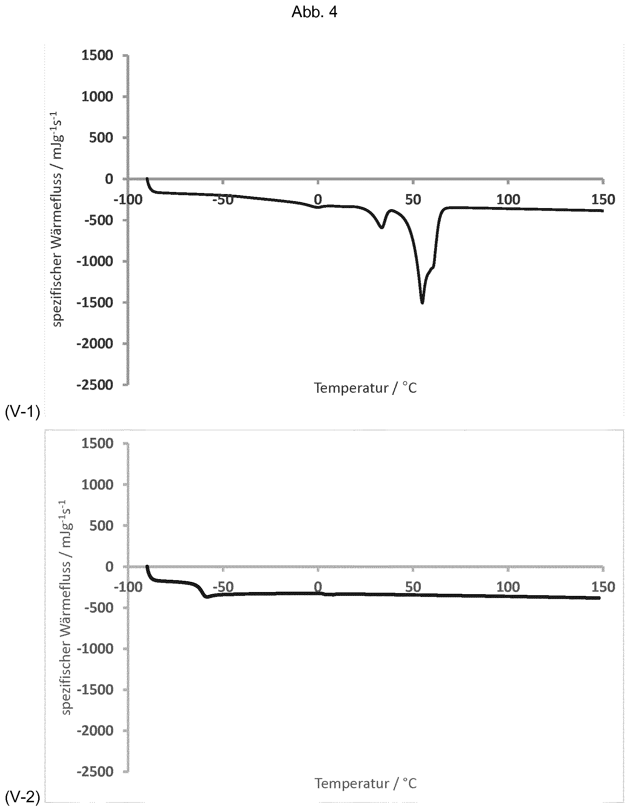

Umgekehrt kann aus dem Beispiel V-1 der Abbildung 4 deutlich entnommen werden, dass Kristallinität nicht kausal für das Vorliegen von Rekristallisation ist und hier strukturelle Eigenheiten aufgrund der chemischen Konstitution den Effekt der Rekristallisation bedingen, so dass die Verwendung von ausschließlich linearen Diolen, die keine Etherfunktion aufweisen, nicht zielführend ist. Ähnliches ergibt sich für Polyesterpolyole, die aus Dicarbonsäuren hervorgehen, deren Anzahl an Methylen-Gruppen hinter der erfindungsgemäß erforderlichen zurückbleibt und lediglich eine amorphes Material liefern, dass nicht die gewünschte mechanische Stabilität und Elastizität aufweist.

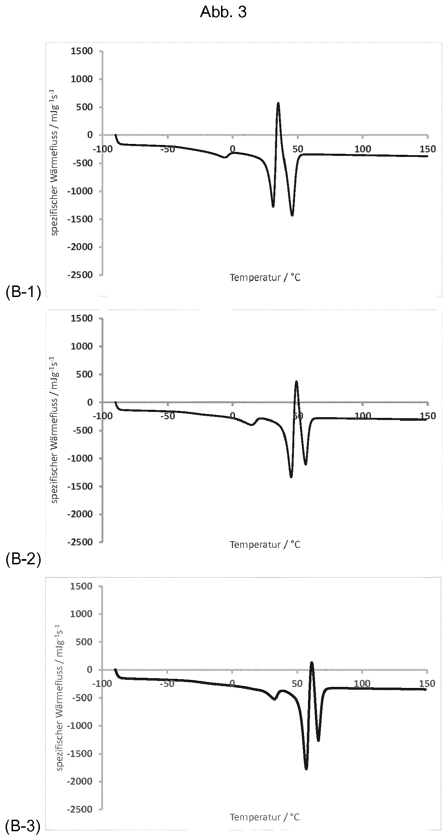

Über die Variation der Kettenlänge der Dicarbonsäuren kann in erfindungsgemäßen Mischungen von Polyesterpolyolen der Schmelzbereich pro zusätzlicher Ethylen-Einheit um ca. 10 °C zu höheren Temperaturen verschoben werden und damit applikationsspezifisch angepasst werden (siehe Beispiele B-1, B-2 und B-3 in Abbildung 3).

| Tab. 1 | | | | | | | | |
|---|---|---|---|---|---|---|---|---|
| Bsp. | Dicarbonsäure | | Diol | | SZ¹ | HZ² | M_{N}³ | P⁴ |
| | Typ | Einwaage / g | Typ | Einwaage / g | | | | |
| A-1 | DMS | 188 | DEG | 113 | 1,2 | 98 | 2466 | 1,9 |
| A-2 | DMS | 68 | PEG | 232 | 1,8 | 63 | 2519 | 2,0 |
| B-1 | DMS | 216 | DEG | 144 | 0,8 | 43 | 4303 | 2,3 |
| | IPS | 42 | | | | | | |
| B-2 | DDMS | 226 | DEG | 135 | 1,0 | 53 | 4211 | 2,0 |
| | IPS | 40 | | | | | | |
| B-3 | TDMS | 236 | DEG | 127 | 1,0 | 38 | 4738 | 2,4 |
| | IPS | 37 | | | | | | |
| A-3 | DMS | 216 | DEG | 144 | 2,0 | 50 | 3696 | 2,3 |
| | FS | 40 | | | | | | |
| V-1 | DMS | 145 | BD | 96 | 1,4 | 39 | 5134 | 2,3 |
| | FS | 29 | | | | | | |
| V-2 | HMS | 173 | DEG | 127 | 1,7 | 62 | 3136 | 2,1 |
| DMS | 1,10-Decamethylendicarbonsäure | | | | | | | |
| DDMS | 1,12-Dodecamethylendicarbonsäure | | | | | | | |
| TDMS | 1,14-Tetradecamethylendicarbonsäure | | | | | | | |
| IPS | Isophtalsäure | | | | | | | |
| FS | 2,5-Furandicarbonsäure | | | | | | | |
| HMS | 1,7-Heptamethylendicarbonsäure | | | | | | | |
| DEG | Diethylenglykol | | | | | | | |
| PEG | Polyethyleneglykol (Molmasse 400 g/mol) | | | | | | | |
| BD | 1,4-Butandiol | | | | | | | |
| ¹ | Säurezahl in mg KOH pro Gramm der Reaktionsmischung | | | | | | | |
| ² | Hydroxylzahl in mg KOH pro Gramm der Reaktionsmischung | | | | | | | |
| ³ | zahlenmittlere Molmasse in g/mol | | | | | | | |
| ⁴ | Polydispersität | | | | | | | |

## Patentansprüche

1. Teilkristalline, beim Schmelzen rekristallisierende Mischung von Polyesterpolyolen erhältlich durch Polykondensation einer Reaktionsmischung umfassend ein oder mehrere Dicarbonsäuren sowie ein oder mehrere Diole, wobei
a) mindestens 50 Mol.-% der Dicarbonsäuren ausgewählt sind aus gesättigten aliphatischen Dicarbonsäuren mit einer geraden Anzahl von mindestens 8 Methylen-Gruppen, die weder ein tertiäres noch ein quartäres Kohlenstoffatom aufweisen; und
b) mindestens 40 Mol.-% der Diole ausgewählt sind aus aliphatischen Diolen, die mindestens eine Etherfunktion, jedoch weder ein tertiäres noch ein quartäres Kohlenstoffatom aufweisen.

2. Mischung gemäß Anspruch 1, **dadurch gekennzeichnet, dass** mindestens 60 Mol.-%, vorzugsweise mindestens 70 Mol.-% der Dicarbonsäuren ausgewählt sind aus Dicarbonsäuren gemäß Komponente a) der Reaktionsmischung.

3. Mischung gemäß einem oder beiden der Ansprüche 1 und 2, **dadurch gekennzeichnet, dass** mindestens 60 Mol.-%, vorzugsweise mindestens 70 Mol.-% der Diole ausgewählt sind aus Diolen gemäß Komponente b) der Reaktionsmischung.

4. Mischung gemäß einem oder mehreren der vorherigen Ansprüche, **dadurch gekennzeichnet, dass** die Dicarbonsäuren gemäß Komponente a) nicht mehr als 24 Methylen-Gruppen, vorzugsweise nicht mehr als 18 Methylen-Gruppen, besonders bevorzugt nicht mehr als 16 Methylen-Gruppen, jedoch vorzugsweise mindestens 10 Methylen-Gruppen aufweisen.

5. Mischung gemäß einem oder mehreren der vorherigen Ansprüche, **dadurch gekennzeichnet, dass** die aliphatischen Diole der Komponente b) ausgewählt sind aus Diolen der allgemeinen Strukturformel H-([O-(CH₂)ₘ]ₓ-[O-(CH₂)ₙ]_{y})_{z}-OH mit m, n als positive ganze Zahlen von 1 bis 4, mit x, y als nicht negative ganze Zahlen, wobei x+y mindestens 1 ist, und mit z als positiver ganzer Zahl, wobei (x+y)z mindestens 2 und z(x(m+1)+y(n+1)) kleiner als 40 ist, wobei vorzugsweise gilt, dass m gleich 2, x gleich 1, y gleich Null und z vorzugsweise kleiner als 10, besonders bevorzugt kleiner als 8 und ganz besonders bevorzugt kleiner als 6 ist.

6. Mischung gemäß einem oder mehreren der vorherigen Ansprüche, **dadurch gekennzeichnet, dass** der Anteil von Dicarbonsäuren, die keine gesättigten aliphatischen Dicarbonsäuren mit einer geraden Anzahl von mindestens 8 Methylen-Gruppen, jedoch mindestens 9 Kohlenstoffatome aufweisen, bezogen auf den Gesamtanteil an Dicarbonsäuren in der Reaktionsmischung kleiner als 20 Mol.-%, vorzugsweise kleiner als 10 Mol.-%, besonders bevorzugt kleiner als 4 Mol.-% ist.

7. Mischung gemäß einem oder mehreren der vorherigen Ansprüche, **dadurch gekennzeichnet, dass** zusätzlich zu den Dicarbonsäuren, die gesättigte aliphatische Dicarbonsäuren mit einer geraden Anzahl von mindestens 8 Methylen-Gruppen darstellen, ungesättigte Dicarbonsäuren mit weniger als 9 Kohlenstoffatomen und/oder aromatische Dicarbonsäuren enthalten sind, die vorzugsweise ausgewählt sind aus Isophtalsäure, Terephtalsäure, Orthophtalsäure, Furandicarbonsäure, Itakonsäure, Fumarsäure und/oder Maleinsäure, wobei deren Anteil bezogen auf den Gesamtanteil der Dicarbonsäuren vorzugsweise jeweils mindestens 2 Mol.-%, vorzugsweise mindestens 8 Mol.-%, besonders bevorzugt mindestens 15 Mol.-%, jedoch in der Summe vorzugsweise kleiner als 40 Mol.-%, besonders bevorzugt kleiner als 30 Mol.-% ist.

8. Mischung gemäß einem oder mehreren der vorherigen Ansprüche, **dadurch gekennzeichnet, dass** der Anteil an Diolen, die keine Diole gemäß Komponente b) darstellen und sowohl mindestens eine Etherfunktion als auch tertiäre und/oder quartäre Kohlenstoffatome aufweisen, bezogen auf den Gesamtanteil an Diolen kleiner als 20 Mol.-%, vorzugsweise kleiner als 10 Mol.-%, besonders bevorzugt kleiner als 4 Mol.-% ist.

9. Mischung gemäß einem oder mehreren der vorherigen Ansprüche, **dadurch gekennzeichnet, dass** zusätzlich zu den Diolen gemäß Komponente b) aliphatische Diole enthalten sind, die keine Etherfunktion und nicht mehr als 10 Kohlenstoffatome aufweisen, die vorzugsweise ausgewählt sind aus Ethylenglykol, 1,3-Propandiol, 1,4-Butandiol, 1,6-Hexandiol und/oder 1,8-Oktandiol, wobei deren Anteil bezogen auf den Gesamtanteil der Diole vorzugsweise mindestens 1 Mol.-%, jedoch vorzugsweise kleiner als 40 Mol.-%, besonders bevorzugt kleiner als 20 Mol.-% und ganz besonders bevorzugt kleiner als 10 Mol.-% ist.

10. Mischung gemäß einem oder mehreren der vorherigen Ansprüche, **dadurch gekennzeichnet, dass** die Reaktionsmischung zusätzlich unverzweigte β-, γ-, δ- und/oder ε-Hydroxycarbonsäuren enthält, die auch in ihrer Lacton-Form vorliegen können, wobei deren Anteil bezogen auf den Gesamtanteil der Dicarbonsäuren vorzugsweise mindestens 1 Mol.-%, jedoch vorzugsweise kleiner als 35 Mol.-%, besonders bevorzugt kleiner als 22 Mol.-% ist.

11. Mischung gemäß einem oder mehreren der vorherigen Ansprüche, **dadurch gekennzeichnet, dass** der Anteil anderer kondensationsfähiger organischer Verbindungen, die weder Dicarbonsäuren noch Diole noch Hydroxycarbonsäuren gemäß Anspruch 10 darstellen, in der Reaktionsmischung kleiner als 10 Gew.-% bezogen auf den Gesamtanteil der Dicarbonsäuren und Diole ist.

12. Mischung gemäß einem oder mehreren der vorherigen Ansprüche, **dadurch gekennzeichnet, dass** die Diole in der Reaktionsmischung im molaren Überschuss bezogen auf die Dicarbonsäuren enthalten sind, jedoch vorzugsweise nicht oberhalb eines Überschusses von 1,2 : 1.

13. Mischung gemäß einem oder mehreren der vorherigen Ansprüche, **dadurch gekennzeichnet, dass** selbige eine Säurezahl kleiner als 50 mg KOH/g, vorzugsweise kleiner als 10 mg KOH/g, besonders bevorzugt kleiner als 5 mg KOH/g, besonders bevorzugt kleiner als 2 mg KOH/g, und eine Hydroxylzahl im Bereich von 10 bis 150 mg KOH/g, vorzugsweise im Bereich von 20 bis 120 mg KOH/g aufweist.

14. Polymeres Material erhältlich durch Addition solcher organischen Verbindungen, die mindestens eine Epoxid- und/oder Isocyanat-Gruppe, vorzugsweise mindestens zwei dieser Gruppen und besonders bevorzugt mindestens zwei Isocyanat-Gruppen enthalten, an terminale Hydroxyl-Gruppen der Mischung gemäß einem oder beiden der Ansprüche 12 und 13.

15. Verwendung der Mischung nach einem oder mehreren der Ansprüche 1 bis 13 oder des Materials nach Anspruch 14 als Bestandteil eines thermoplastischen Materials oder eines Kleb-und/oder Dichtstoffes.

## Claims

1. A semi-crystalline mixture of polyester polyols which recrystallizes upon melting, obtainable by polycondensation of a reaction mixture comprising one or more dicarboxylic acids and one or more diols, wherein
a) at least 50 mol.% of the dicarboxylic acids are selected from saturated aliphatic dicarboxylic acids having an even number of at least 8 methylene groups which have neither a tertiary nor a quaternary carbon atom; and
b) at least 40 mol.% of the diols are selected from aliphatic diols that have at least one ether function but have neither a tertiary nor a quaternary carbon atom.

2. The mixture according to claim 1, **characterized in that** at least 60 mol.%, preferably at least 70 mol.%, of the dicarboxylic acids are selected from dicarboxylic acids according to component a) of the reaction mixture.

3. The mixture according to one or both of claims 1 and 2, **characterized in that** at least 60 mol.%, preferably at least 70 mol.%, of the diols are selected from diols according to component b) of the reaction mixture.

4. The mixture according to one or more of the preceding claims, **characterized in that** the dicarboxylic acids according to component a) have no more than 24 methylene groups, preferably no more than 18 methylene groups, particularly preferably no more than 16 methylene groups, but preferably at least 10 methylene groups.

5. The mixture according to one or more of the preceding claims, **characterized in that** the aliphatic diols of component b) are selected from diols of general structural formula H-([O-(CH₂)ₘ]ₓ-[O-(CH₂)ₙ]_{y})_{z}-OH where m, n are positive integers from 1 to 4, where x, y are non-negative integers, x + y being at least 1, and where z is a positive integer, (x+y)z being at least 2 and z(x(m+1)+y(n+1)) being less than 40, it being preferable that m is equal to 2, x is equal to 1, y is equal to zero, and z is preferably less than 10, particularly preferably less than 8 and very particularly preferably less than 6.

6. The mixture according to one or more of the preceding claims, **characterized in that** the proportion of dicarboxylic acids which do not have saturated aliphatic dicarboxylic acids having an even number of at least 8 methylene groups, but have at least 9 carbon atoms, is less than 20 mol.%, preferably less than 10 mol.%, particularly preferably less than 4 mol.%, based on the total proportion of dicarboxylic acids in the reaction mixture.

7. The mixture according to one or more of the preceding claims, **characterized in that**, in addition to the dicarboxylic acids which represent saturated aliphatic dicarboxylic acids having an even number of at least 8 methylene groups, unsaturated dicarboxylic acids having less than 9 carbon atoms and/or aromatic dicarboxylic acids are contained, which acids are preferably selected from isophthalic acid, terephthalic acid, orthophthalic acid, furandicarboxylic acid, itaconic acid, fumaric acid and/or maleic acid, the proportion thereof, based on the total proportion of dicarboxylic acids, being preferably in each case at least 2 mol.%, preferably at least 8 mol.%, particularly preferably at least 15 mol.%, but in total preferably less than 40 mol.%, particularly preferably less than 30 mol.%.

8. The mixture according to one or more of the preceding claims, **characterized in that** the proportion of diols which do not represent diols according to component b) and have at least one ether function and tertiary and/or quaternary carbon atoms is less than 20 mol.%, preferably less than 10 mol.%, particularly preferably less than 4 mol.%, based on the total proportion of diols.

9. The mixture according to one or more of the preceding claims, **characterized in that**, in addition to the diols according to component b), aliphatic diols are contained which have no ether function and no more than 10 carbon atoms, which diols are preferably selected from ethylene glycol, 1,3-propanediol, 1,4-butanediol, 1,6-hexanediol and/or 1,8-octanediol, the proportion thereof being preferably at least 1 mol.%, but preferably less than 40 mol.%, particularly preferably less than 20 mol.% and very particularly preferably less than 10 mol.%, based on the total proportion of the diols.

10. The mixture according to one or more of the preceding claims, **characterized in that** the reaction mixture additionally contains unbranched β-, γ-, δ- and/or ε-hydroxycarboxylic acids which may also be present in their lactone form, the proportion thereof being preferably at least 1 mol.%, but preferably less than 35 mol.%, particularly preferably less than 22 mol.%, based on the total proportion of dicarboxylic acids.

11. The mixture according to one or more of the preceding claims, **characterized in that**, in the reaction mixture, the proportion of other condensable organic compounds which do not represent either dicarboxylic acids or diols or hydroxycarboxylic acids according to claim 10 is less than 10 wt.%, based on the total proportion of dicarboxylic acids and diols.

12. The mixture according to one or more of the preceding claims, **characterized in that** the diols are contained in the reaction mixture in a molar excess based on the dicarboxylic acids, but preferably not above an excess of 1.2:1.

13. The mixture according to one or more of the preceding claims, **characterized in that** said mixture has an acid number of less than 50 mg KOH/g, preferably less than 10 mg KOH/g, particularly preferably less than 5 mg KOH/g, more particularly preferably less than 2 mg KOH/g, and a hydroxyl number in the range of from 10 to 150 mg KOH/g, preferably in the range of from 20 to 120 mg KOH/g.

14. A polymeric material obtainable by the addition of organic compounds of this kind which contain at least one epoxide and/or isocyanate group, preferably at least two of these groups and particularly preferably at least two isocyanate groups, to terminal hydroxyl groups of the mixture according to one or both of claims 12 and 13.

15. The use of the mixture according to one or more of claims 1 to 13 or of the material according to claim 14 as a component of a thermoplastic material or of an adhesive and/or sealant.

## Revendications

1. Mélange de polyester polyols partiellement cristallin, recristallisant à l'état fondu, pouvant être obtenu par polycondensation d'un mélange réactionnel comprenant un ou plusieurs acides dicarboxyliques et un ou plusieurs diols, dans lequel
a) au moins 50 % en moles des acides dicarboxyliques sont choisis parmi les acides dicarboxyliques aliphatiques saturés ayant un nombre pair d'au moins 8 groupes méthylène qui ne possèdent ni un atome de carbone tertiaire, ni un atome de carbone quaternaire ; et
b) au moins 40 % en moles des diols sont choisis parmi les diols aliphatiques présentant au moins une fonction éther, mais pas d'atome de carbone tertiaire ou quaternaire.

2. Mélange selon la revendication 1, **caractérisé en ce qu'** au moins 60 % en moles, de préférence au moins 70 % en moles des acides dicarboxyliques sont choisis parmi les acides dicarboxyliques selon le composant a) du mélange réactionnel.

3. Mélange selon l'une ou les deux revendications 1 et 2, **caractérisé en ce qu'** au moins 60 % en moles, de préférence au moins 70 % en moles des diols sont choisis parmi les diols selon le composant b) du mélange réactionnel.

4. Mélange selon une ou plusieurs des revendications précédentes, **caractérisé en ce que** les acides dicarboxyliques selon le composant a) ne présentent pas plus de 24 groupes méthylène, de préférence pas plus de 18 groupes méthylène, de manière davantage préférée pas plus de 16 groupes méthylène, mais de préférence au moins 10 groupes méthylène.

5. Mélange selon une ou plusieurs des revendications précédentes, **caractérisé en ce que** les diols aliphatiques du composant b) sont choisis parmi les diols de la formule développée générale H-([O-(CH₂)ₘ]ₓ-[O-(CH₂)ₙ]_{y})_{z}-OH dans laquelle m, n représentent des nombres entiers positifs de 1 à 4, x, y représentent des nombres entiers non négatifs, x+y représentant au moins 1, et z représentant un nombre entier positif, (x+y)z représente au moins 2 et z(x(m+1)+y(n+1)) est inférieur à 40, dans laquelle m est de préférence égal à 2, x est égal à 1, y est égal à zéro et z est de préférence inférieur à 10, de manière davantage préférée inférieur à 8 et de manière particulièrement préférée inférieur à 6.

6. Mélange selon une ou plusieurs des revendications précédentes, **caractérisé en ce que** la proportion d'acides dicarboxyliques ne contenant pas d'acides dicarboxyliques aliphatiques saturés ayant un nombre pair d'au moins 8 groupes méthylène, mais d'au moins 9 atomes de carbone, par rapport à la proportion totale d'acides dicarboxyliques dans le mélange réactionnel est inférieure à 20 % en moles, de préférence inférieure à 10 % en moles, de manière davantage préférée inférieure à 4 % en moles.

7. Mélange selon une ou plusieurs des revendications précédentes, **caractérisé en ce que**,outre les acides dicarboxyliques qui présentent des acides dicarboxyliques aliphatiques saturés ayant un nombre pair d'au moins 8 groupes méthylène, des acides dicarboxyliques insaturés ayant moins de 9 atomes de carbone et/ou des acides dicarboxyliques aromatiques choisis de préférence parmi l'acide isophtalique, l'acide téréphtalique, l'acide orthophtalique, l'acide furane-dicarboxylique, l'acide itaconique, l'acide fumarique et/ou l'acide maléique, dont la proportion par rapport à la proportion totale des acides dicarboxyliques est de préférence d'au moins 2 % en moles, de préférence d'au moins 8 % en moles, de manière davantage préférée d'au moins 15 % en moles, mais au total de préférence inférieure à 40 % en moles, de manière davantage préférée inférieure à 30 % en moles.

8. Mélange selon une ou plusieurs des revendications précédentes, **caractérisé en ce que** la proportion de diols ne présentant pas de diols selon le composant b) et ayant à la fois au moins une fonction éther et des atomes de carbone tertiaires et/ou quaternaires, par rapport à la proportion totale en diols est inférieure à 20 % en moles, de préférence inférieure à 10 % en moles, de manière davantage préférée moins de 4 % en moles.

9. Mélange selon une ou plusieurs des revendications précédentes, **caractérisé en ce qu'**il contient, outre les diols selon le composant b), des diols aliphatiques ne présentant aucune fonction éther et n'ayant pas plus de 10 atomes de carbone étant de préférence choisis parmi l'éthylène glycol, le 1,3-propanediol, le 1,4-butanediol, le 1,6-hexanediol et/ou le 1,8-octanediol, dont la proportion par rapport à la proportion totale en diols, est de préférence d'au moins 1 % en moles, mais de préférence inférieure à 40 % en moles, de manière davantage préférée inférieure à 20 % en moles et de manière particulièrement préférée inférieure à 10 % en moles.

10. Mélange selon une ou plusieurs des revendications précédentes, **caractérisé en ce que** le mélange réactionnel contient, outre des acides β-, γ-, δ- et/ou ε-hydroxycarboxyliques non ramifiés pouvant également être présents sous leur forme lactone, dont la proportion par rapport à la proportion totale des acides dicarboxyliques est de préférence d'au moins 1 % en moles, mais de préférence inférieure à 35 % en moles, de manière davantage préférée inférieure à 22 % en moles.

11. Mélange selon une ou plusieurs des revendications précédentes, **caractérisé en ce que** la proportion d'autres composés organiques capables de condensation ne présentant ni des acides dicarboxyliques, ni des diols ni des acides hydroxycarboxyliques selon la revendication 10 dans le mélange réactionnel est inférieure à 10 % en poids par rapport à la proportion totale d'acides dicarboxyliques et de diols.

12. Mélange selon une ou plusieurs des revendications précédentes, **caractérisé en ce que** les diols dans le mélange réactionnel sont présents en un excès molaire par rapport aux acides dicarboxyliques, mais de préférence ne dépassant pas un excès de 1,2: 1.

13. Mélange selon une ou plusieurs des revendications précédentes, **caractérisé en ce qu'**il présente un indice d'acidité inférieur à 50 mg KOH/g, de préférence inférieur à 10 mg KOH/g, de manière davantage préférée inférieur à 5 mg KOH/g, de manière davantage préférée inférieur à 2 mg KOH/g, et un indice d'hydroxyle compris entre 10 et 150 mg KOH/g, de préférence compris entre 20 et 120 mg KOH/g.

14. Matériau polymère pouvant être obtenu par addition de composés organiques contenant au moins un groupe époxy et/ou isocyanate, de préférence au moins deux de ces groupes et de manière davantage préférée au moins deux groupes isocyanate, à des groupes hydroxyle terminaux du mélange selon une ou les deux revendications 12 et 13.

15. Utilisation du mélange selon une ou plusieurs des revendications 1 à 13 ou du matériau selon la revendication 14 comme constituant d'un matériau thermoplastique ou d'un adhésif et/ou d'un produit d'étanchéité.
